# FASCICULE DE BREVET EUROPEEN

(11) **EP 1 729 582 B1**
(45) Date de publication et mention de la délivrance du brevet: **23.12.2015**
(21) Numéro de dépôt: 05746653.4
(22) Date de dépôt: 30.03.2005
(51) Int. Cl.: A01N 43/16, A01N 65/03, A01P 21/00

(54) **UTILISATION DES ULVANES COMME ACTIVATEURS DES REACTIONS DE DEFENSE DES PLANTES ET DE RESISTANCE CONTRE DES CONTRAINTES BIOTIQUES OU ABIOTIQUES**
VERWENDUNG VON ULVANEN ALS AKTIVATOREN VON ABWEHR- UND WIDERSTANDSREAKTIONEN GEGEN BIOTISCHEN ODER ABIOTISCHEN STRESS
USE OF ULVANS AS ACTIVATORS OF PLANT DEFENCE AND RESISTANCE REACTIONS AGAINST BIOTIC OR ABIOTIC STRESSES

(30) Priorité: 30.03.2004 FR 0403269
(43) Date de publication de la demande: 13.12.2006
(73) Titulaire: CENTRE MONDIAL D'INNOVATION, 35400 Saint-Malo (FR)
(72) Inventeur: BRIAND, Xavier, 22740 Lezardrieux (FR); CLUZET, Stéphanie, 33140 Villenave d' Ornon (FR); ESQUERRE-TUGAYE, Marie-Thérèse, 31320 Castanet-Tolosan (FR); SALAMAGNE, Sylvie, 77410 Gressy en France (FR); DUMAS, Bernard, 31850 Montrabe (FR)
(74) Mandataire: Hubert, Philippe
(86) Numéro de dépôt international: PCT/FR2005/000765
(87) Numéro de publication internationale: WO 2005/094588

(56) Documents cités:
- EP-A1- 1 437 334
- WO-A-02/26037
- WO-A-91/07946
- WO-A-99/53761
- FATIMA BI; SEEMA IQBAL: "Studies on aqueous extracts of three green algae as an elicitor of plant defence mechanism" PAKISTAN JOURNAL OF BOTANY, vol. 31, no. 1, juin 1999 (1999-06), pages 193-198, XP001204201
- MACROMOLECULES, vol. 35, 2002, pages 6404-6411, XP002303820
- CARBOHYDRATE RESEARCH, vol. 262, 1994, pages 115-125, XP002303821

## Description

La présente invention, qui trouve application dans le domaine agricole, a essentiellement pour objet l'utilisation des ulvanes, notamment extraits d'algues vertes du genre *Ulva* ou *Enteromorpha,* ou d'oligosaccharides dérivés d'ulvanes obtenus par hydrolyse acide ou enzymatique dudit ulvane, comme activateurs des réactions de défense des plantes et de résistance contre des contraintes biotiques ou abiotiques.

La présente invention a également pour objet un procédé de traitement des plantes, notamment par voie foliaire ou racinaire utilisant lesdits ulvanes ou oligosaccharides dérivés d'ulvane.

Les plantes peuvent être attaquées par de multiples agents pathogènes (champignons, bactéries, virus, viroïdes, protozoaires, nématodes, herbivores) avec pour conséquences des pertes de rendement et une baisse de qualité de la production.

Parallèlement à la lutte chimique, qui recourt à l'utilisation de pesticides, de nouvelles stratégies de protection des végétaux ont vu le jour.

En effet, bien que dépourvues de système immunitaire analogue aux animaux supérieurs, les plantes disposent de leur propre arsenal de défense. La connaissance de ces mécanismes permet d'envisager leur exploitation pour lutter contre les maladies.

Le contrôle par la plante des effets du pathogène résulte d'une série d'événements déclenchés dans les cellules végétales à partir du moment où la plante est attaquée :
1. reconnaissance de l'agent pathogène,
2. envoi de cette information au noyau,
3. induction de gènes de défense puis synthèse de composés anti-microbiens,
4. transmission du signal d'alarme à toute la plante et à ses voisines.

Ainsi, pour augmenter la capacité de réponse et donc de résistance d'une plante vis-à-vis de certains pathogènes, une des stratégies possibles consiste à induire préalablement à l'attaque du pathogène les réactions de défense par l'utilisation de molécules signaux.

Ces molécules signaux, qui sont de natures chimiques très variées (protéines, peptides, glycoprotéines, lipides et oligosaccharides), sont capables de transmettre l'information d'une attaque même à très faible concentration.

Elles sont pour la plupart d'origine microbienne (par exemple la harpine) ou végétale (par exemple les acides oligogalacturoniques) ou synthétisés chimiquement (par exemple le benzothiadiazole).

En réponse aux traitements par ces molécules signaux, la plante réagit en synthétisant des protéines structurelles, qui renforcent la paroi des cellules végétales, des enzymes impliquées dans la synthèse de composés anti-microbiens tels que des phytoalexines, des hydrolases comme des chitinases ou des glucanases et des enzymes inhibitrices qui agissent contre les enzymes hydrolytiques des agents pathogènes.

Dans le cas d'une interaction plante-parasite de type incompatible, les réponses de défense les plus couramment observées sont :
- la mort cellulaire rapide et localisée au site d'infection encore dénommée réponse hypersensible ou "HR",
- la synthèse et le dépôt de composés phénoliques et de protéines dans la paroi,
- l'accumulation de composés antimicrobiens et la synthèse de protéines dites "PR" (pour Pathogenesis-Related).

Le renforcement des barrières structurales, qui peut ralentir ou inhiber la progression du pathogène à l'intérieur de la plante, est souvent associé à la HR. Par exemple, le dépôt de callose dans la paroi ou les plasmodesmes, ainsi que la synthèse de lignines permettent de ralentir les invasions fongiques ou virales. De même, les HRGP extensines (pour Hydroxyprolin Rich GlycoProtein) et les GRP (pour Glycin Rich Protein) peuvent, par leur rôle de renforcement de la paroi, rendre cette dernière plus difficile à dégrader.

Les phytoalexines, composés antimicrobiens de faible poids moléculaire, permettent dans certains cas de lutter directement contre les parasites, en raison de leur capacité à s'accumuler rapidement autour du point d'infection en empêchant ainsi la progression de l'invasion. Plus de 350 phytoalexines ont été isolées et caractérisées à partir d'une trentaine de familles de végétaux. Elles présentent une grande diversité de structures et dérivent des métabolismes secondaires du shikimate, de l'acétate-malonate et de l'acétate-mévalonate. Certaines se retrouvent dans plusieurs familles de végétaux, alors que d'autres sont spécifiques d'une famille donnée. C'est le cas notamment des isoflavones des Légumineuses ou des sesquiterpènes des Solanacées. Il est cependant à noter que les phytoalexines ne semblent pas jouer de rôle crucial dans la résistance à tous les agents pathogènes, comme par exemple pour *Arabidopsis thaliana.*

La HR est aussi accompagnée de la synthèse de protéines PR. Ces protéines intra- ou extra-cellulaires s'accumulent dans les plantes après leur inoculation par des agents pathogènes et, dans le cas d'interactions incompatibles, peuvent constituer jusqu'à 10% des protéines solubles de la feuille. Pour certaines, un rôle actif dans la dégradation de la paroi d'agents pathogènes fongiques (β-glucanase, chitinase) a été montré.

Il est à noter que les trois phénomènes précités (renforcement de la paroi, synthèse de phytoalexines et synthèse de protéines PR) accompagnent la HR sans en être exclusifs. En effet, la synthèse de protéines GRP et HRGP a aussi été détectée lors d'interactions compatibles, ainsi que consécutivement à une blessure.

Les algues marines constituent une ressource végétale abondante et sont, depuis longtemps, utilisées sur les régions côtières comme fertilisants du sol. La germination des graines, l'obtention de meilleurs rendements, une résistance aux maladies, une durée de conservation plus longue des fruits ont été mises en évidence par suite de traitements de plusieurs plantes par des extraits d'algues. Les conclusions en matière de santé des plantes avaient essentiellement été attribuées à la richesse en bétaines, en phytohormones et en oligo-éléments des algues utilisées.

Il est aujourd'hui reconnu que certains oligosaccharides d'origine marine présentent un effet éliciteur sur certaines voies de défense des plantes. Ainsi, le document WO 99/03346 décrit l'utilisation d'oligosaccharides de type ß(1-3) glucanes notamment extraits de l'algue brune *Laminaria digitata* pour la potentialisation et la stimulation des défenses naturelles du blé infecté par la septoriose. Ces ß(1-3) glucanes induisent également chez les cellules de tabac quatre marqueurs de défense dont l'activité phénylammonialyase (PAL), qui est une enzyme clé pour la synthèse des phytoalexines, et l'activité O-méthyl transférase (OMT), qui est une enzyme impliquée dans la synthèse de lignine.

Bi et al., Pakistan Journal of Botany, vol. 31, no. 1, juin 1999, pages 193-198 décrit des fractions contenant des oligosaccharides de haut poids moléculaire extraits d'algue ayant des propriétés alléguées de stimulation des défenses naturelles des plantes.

Dans le cas des algues rouges, il a été montré que le carraghénane induit l'expression des gènes codant pour la cyclase sesquiterpène, la chitinase et les inhibiteurs de protéinases.

Dans le cas des algues vertes, qui elles aussi sont riches en polysaccharides, aucune étude n'a démontré à ce jour que des polysaccharides extraits de ces algues présentaient des propriétés élicitrices comparables à celles mises en évidence chez les algues brunes et rouges.

C'est dans ce contexte qu'il a été découvert, et ceci constitue le fondement de la présente invention, que les ulvanes notamment extraits d'algues vertes et les oligosaccharides dérivés de ces derniers permettent, de façon tout à fait surprenante et inattendue, de stimuler l'expression des gènes de défense des plantes et peuvent donc être utilisés comme activateurs des réactions de défense des plantes et de résistance contre des contraintes biotiques ou abiotiques, notamment en remplacement des pesticides ou en complément dans des compositions fertilisantes ou dans des engrais.

Ainsi, selon un premier aspect, la présente demande vise à couvrir l'utilisation des ulvanes, notamment extraits d'algues vertes du genre *Ulva* ou *Enteromorpha,* ou d'oligosaccharides dérivés d'ulvanes obtenus par hydrolyse acide ou enzymatique dudit ulvane, comme activateurs des réactions de défense des plantes et de résistance contre des contraintes biotiques ou abiotiques.

Les ulvanes utiles selon l'invention sont des polysaccharides hydrosolubles présents notamment dans les parois cellulaires des algues vertes des genres *Ulva* et *Enteromorpha.*

Les ulvanes se définissent plus précisément comme des polysaccharides acides fortement sulfatés et sont essentiellement composés d'unités dérivées de rhamnose 3-sulfate, de xylose, de xylose 2-sulfate, d'acide glucuronique et d'acide iduronique.

Les quatre unités récurrentes suivantes sont notamment caractéristiques des ulvanes : 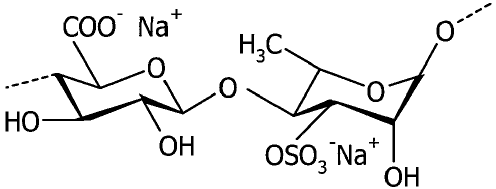 >4)- β-D-GlcA- (1>4)- α-L-Rha 3 sulfate(1>
(encore dénommé acide ulvanobiouronique 3-sulfate type A) 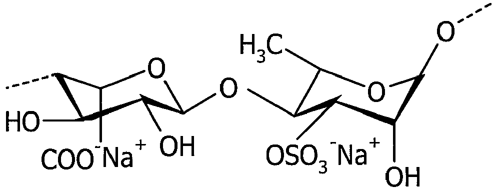 >4)- α-L-IdoA- (1>4)- α-L-Rha 3 sulfate(1>
(encore dénommé acide ulvanobiuronique 3-sulfate type B) 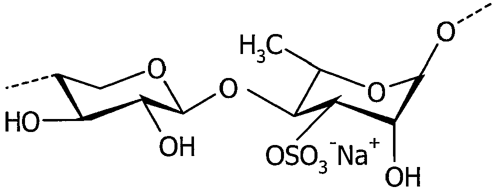 >4)- P-D-Xyl- (1>4)- α-L-Rha 3 suifate(1>
(encore dénommé acide ulvanobiose 3-sulfate) 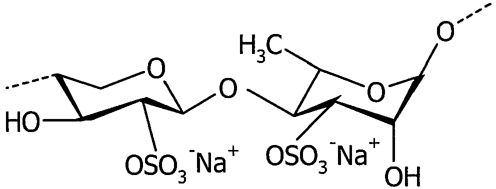 >4)- β-D-Xyl 2 -sulfate- (1>4)- α-L-Rha 3 sulfate(1>
(encore dénommé acide ulvanobiose 2',3-disulfate)

Les ulvanes représentent entre 5 et 20% du poids sec de l'algue. Leur poids moléculaire varie entre 90000 et 500000 g.mol⁻¹ chez les genres *Ulva* et *Enteromorpha.*

Avantageusement, les ulvanes utilisés selon la présente invention sont extraits d'algues choisies dans le groupe constitué des espèces suivantes : *Ulva armoricana, Ulva rigida, Ulva rotundata, Ulva lactuca, Enteromorpha intestinalis* et *Entoromorpha compressa.*

Des extraits d'algues riches en ulvanes susceptibles d'être utilisés dans le cadre de la présente invention peuvent être obtenus à partir des espèces d'algues précitées, par un procédé comportant généralement les étapes suivantes : lavage, broyage, extraction (séparation solide-liquide) et éventuellement fractionnement et concentration.

L'extrait obtenu peut être plus ou moins concentré selon l'utilisation envisagée. Une déshydratation totale de cet extrait permettant une présentation sous forme pulvérulente hydrosoluble peut être obtenue, par exemple, par sécheur à tambour ou par atomisation.

Les conditions d'extraction et la nature des algues seront choisies de telle façon que l'extrait obtenu présente la concentration souhaitée dans l'application envisagée. Ces choix pourront être facilement réalisés par l'homme du métier, notamment en tenant compte des indications générales qui vont suivre.

D'une façon générale la quantité d'ulvanes ou d'oligosaccharides dérivés d'ulvanes apportée aux plantes est de 0,1 g à 100 g par litre et préférentiellement de l'ordre de 1 g par litre pour les apports sous forme liquide en foliaire ou dans les solutions nutritives racinaires (hydroponie, goutte à goutte, ...) ou bien encore de 10 à 1000 g/ha et préférentiellement de l'ordre de 200 g/ha pour les apports sous forme solide dans les engrais pulvérulents ou granulés.

La quantité d'ulvanes apportée aux plantes doit être suffisante pour stimuler l'expression des gènes impliqués dans la défense de la plante. Cette quantité est variable selon la nature de la plante à traiter et le mode de traitement (voie foliaire ou voie racinaire). Cette quantité pourra notamment être déterminée au cas par cas par la mise en oeuvre de tests macroarrays tels que définis ci-dessous.

Selon un deuxième aspect, la présente demande vise à protéger un procédé de traitement des plantes destiné à activer les réactions de défense et de résistance contre les contraintes biotiques ou abiotiques, caractérisé en ce qu'il comprend l'application aux dites plantes d'une quantité efficace d'ulvanes, notamment extraits d'algues vertes du genre *Ulva* ou *enteromorpha,* ou d'oligosaccharides dérivés d'ulvanes par hydrolyse acide ou enzymatique.

Avantageusement, l'application aux plantes sera réalisée par voie foliaire ou par voie racinaire.

La quantité efficace d'ulvanes ou d'oligosaccharides dérivés d'ulvanes apportée aux plantes est de 0,1 g à 100 g par litre et préférentiellement de l'ordre de 1 g par litre pour les apports sous forme liquide en foliaire ou dans les solutions nutritives racinaires (hydroponie, goutte à goutte, ...) ou bien encore de 10 à 1000 g/ha et préférentiellement de l'ordre de 200 g/ha pour les apports sous forme solide dans les engrais pulvérulents ou granulés.

Le produit phytosanitaire, comprenant une quantité efficace d'au moins un ulvane, notamment extrait d'algues vertes du genre *Ulva* ou *Enteromorpha,* ou un oligosaccharide dérivé d'ulvane obtenus par hydrolyse acide ou enzymatique dudit ulvane, éventuellement en association avec une ou plusieurs matières fertilisantes se présentera avantageusement sous forme liquide ou sous forme de poudre ou de granule, ces dernières formes solubles pouvant être diluées avec une quantité appropriée de solvants, comme par exemple de l'eau.

Ce produit contiendra avantageusement une quantité efficace d'ulvanes ou d'oligosaccharides dérivés d'ulvanes apportée aux plantes de 0,1 g à 100 g par litre et préférentiellement de l'ordre de 1 g par litre pour les apports sous forme liquide en foliaire ou dans les solutions racinaires (hydroponie, goutte à goutte, ...) ou bien encore de 10 à 1000 g/ha et préférentiellement de l'ordre de 200 g/ha pour les apports sous forme solide.

A titre d'exemples de produits fertilisants pouvant être utilisés dans le cadre d'une utilisation conforme à l'invention, on citera les amendements calcaires, les amendements organiques et les supports de culture, les engrais racinaires de type NP, PK, NPK, etc., les engrais foliaires ou encore les solutions nutritives racinaires.

Les substances fertilisantes susceptibles d'être utilisées en association avec les ulvanes ou les oligosaccharides dérivés d'ulvanes peuvent être de natures variées et choisies par exemple parmi l'urée, le sulfate d'ammonium, le phosphate naturel, le chlorure de potassium, le sulfate d'ammonium, le nitrate de magnésium, le nitrate de manganèse, le nitrate de zinc, le nitrate de cuivre, l'acide phosphorique, l'acide borique.

La présente invention trouve application dans le traitement d'une très grande variété de plantes.

Parmi celles-ci, on citera en particulier :
- les plantes de grande culture telles que les céréales (blé, maïs),
- les protéagineux (pois),
- les oléagineux (soja, tournesol),
- les plantes prairials utiles pour l'alimentation animale,
- les cultures spécialisées telles qu'en particulier le maraîchage (laitue, épinard, tomate, melon), la vigne, l'arboriculture (poire, pomme, nectarine), ou l'horticulture (rosiers).

Par l'expression "plante" on entend désigner dans la présente demande la plante considérée dans son ensemble, incluant son appareil racinaire, son appareil végétatif, les graines, semences et fruits.

La présente invention sera maintenant illustrée par les exemples non limitatifs suivants.

Dans ces exemples, et sauf indication contraire, les pourcentages sont exprimés en poids et la température est la température ambiante.

### EXEMPLE 1 - Procédé de préparation d'un extrait d'algue riche en ulvanes utilisable dans le cadre de l'invention

### A - Description générale

### a) Préparation des ulvanes

La fraction d'ulvanes est obtenue par extraction aqueuse d'algues fraîches (100 g d'algues fraîches par litre d'eau).

L'extraction est réalisée sous agitation à 90 °C pendant 2 heures. L'extrait est ensuite filtré sur une membrane (80 µm de porosité). Le solvant (eau) est évaporé pour obtenir une poudre hydrosoluble.

### b) Préparation des oligoulvanes

Les ulvanes préparés comme indiqué en a) ci-dessus sont hydrolysés dans 1 litre de solution acide (acide trichloroacétique ou acide chlorhydrique concentré à 2-3 mol L⁻¹) à 100 °C pendant 30 mins à 1 h, préférentiellement de l'ordre de 40 mins.

L'acide glucuronique, l'acide aldobiuronique, l'ulvanobiouronate et l'acide iduronique ont été identifiés dans les produits d'hydrolyse.

### B. Exemple détaillé d'extraction :

Un extrait *d'Ulva armoricana* enrichi en ulvanes et en particulier en dérivés d'acide iduronique de type xyloidurorhamnane a été obtenu en suivant le protocole expérimental suivant :
a) Lavage
   Des algues fraîches de type *Ulva armoricana* sont soumises à deux lavages successifs dans un bac d'eau, afin d'éliminer le sable et les graviers.
   Les algues sont ensuite déposées dans des paniers grillagés en inox avant d'être introduites dans des bacs où elles sont recouvertes d'eau.
   Une agitation par des buses d'aération permet de maintenir les algues en suspension en favorisant ainsi la décantation des impuretés.
b) Broyage
   Les algues ainsi lavées sont égouttées puis broyées en morceaux de 1 à 10 mm.
c) Extraction
   1000 kg d'algues sont dispersés dans un réacteur chauffant contenant 10000 kg d'une solution aqueuse portée à une température de 90°C. L'ensemble est maintenu à cette température pendant une durée d'environ 2 heures.
   Préalablement à l'extraction, les cellules algales déjà broyées sont micro-éclatées au moyen d'un homogénéisateur de type ULTRA-TURAX® afin de favoriser l'extraction. L'opération de séparation intervient à l'issue des 2 heures d'extraction.
d) Séparation
   La fraction soluble riche en dérivés d'acide iduronique de type xyloidurorhamnane est séparée des débris d'algues par centrifugation (séparation solide-liquide).
   L'extrait centrifugé est ensuite filtré, soit sur un filtre à terre de diatomées, soit sur un filtre à plateaux, puis à nouveau filtré sur une membrane jusqu'à 1 µm.

Le filtrat ainsi obtenu comprend entre 0,1 et 1 % en poids d'extrait sec.

L'extrait ainsi préparé peut être utilisé sous une forme plus ou moins concentrée, la concentration finale étant déterminée en fonction de la teneur recherchée en dérivés actifs dans l'application envisagée.

Ainsi, le filtrat mentionné précédemment peut être concentré, par exemple au moyen d'un évaporateur à flot tombant, de façon à ce que l'extrait sec représente de 10 à 60 % en poids de celui-ci.

Une déshydratation totale peut également être obtenue par exemple par sécheur à tambour ou par atomisation, lorsque l'on recherche une présentation sous forme pulvérulente hydrosoluble.

En procédant comme décrit ci-dessus, on a préparé divers extraits à partir de six espèces d'algues vertes des genres *Ulva* ou *Enteromorpha.* La composition de ces extraits secs est présentée dans le tableau 1 ci-après.

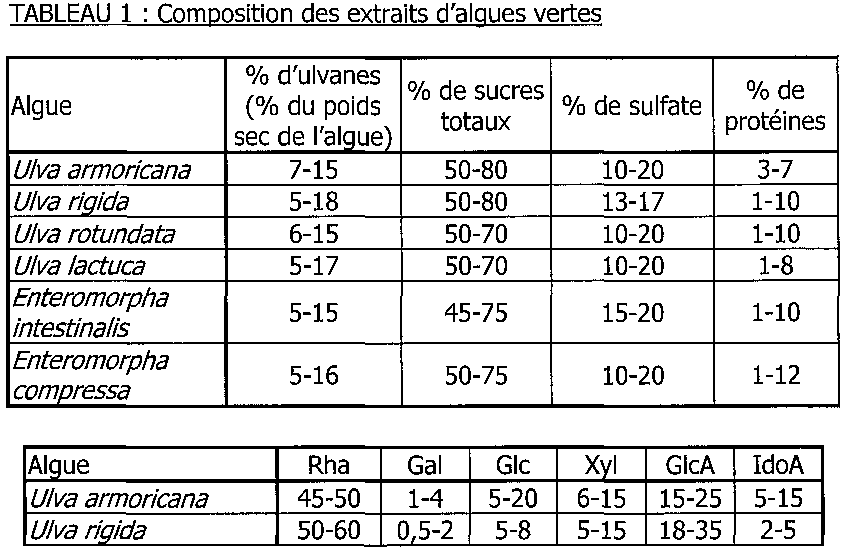

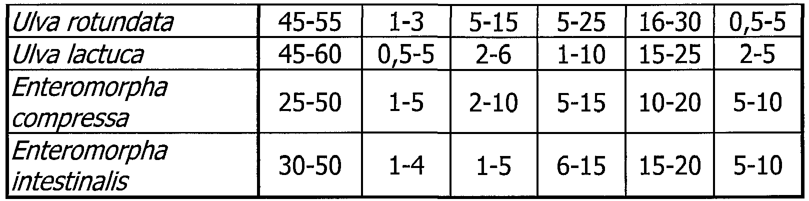

### EXEMPLE 2

### A - Mise en évidence des effets des ulvanes sur l'expression des gènes d'une plante modèle

Une analyse globale de l'expression de nombreux gènes impliqués dans la défense d'une plante modèle a été réalisée en faisant appel aux techniques de génomique fonctionnelle. La légumineuse *Medicago truncatula* (nombre important de séquences d'ADN disponibles) a été utilisée comme plante modèle.

On a ainsi étudié l'effet des ulvanes sur environ 200 gènes impliqués dans la défense de cette plante modèle par analyse macroarray.

### a) Matériel biologique

Des plantes de *Medicago truncatula* lignée F83 005.5 sont cultivées dans un environnement contrôlé (16h / 8h, 20°C / 15°C, 60 % humidité).

Les produits étudiés (extraits obtenus selon le procédé de l'exemple 1) ont été apportés soit par voie foliaire, soit par voie racinaire.

Dans le cas de l'apport foliaire, les différentes solutions d'éliciteurs sont pulvérisées sur les feuilles des plantes âgées de 1 mois à la concentration de 1 mg/mL.

Dans le cas de l'apport racinaire, les produits sont introduits dans le milieu nutritif.

L'étude de l'expression globale des gènes potentiellement impliqués dans la défense et dans la signalisation a été poursuivie par macroarray.

### b) Préparation des Macroarrays

Une sélection d'étiquettes de gènes exprimés (EST) de *Medicago truncatula* basée essentiellement sur leurs implications dans la défense des végétaux et dans le métabolisme primaire est réalisée en utilisant les bases de données TGIR et MENS.

165 EST appartenant aux 144 séquences de *Medicago truncatula* (Tentative consensus séquences (TC)) sont récupérées des librairies MtBA, MtBB et MtBC.

8 fragments génomiques (TC76726, TC77277, TC77910, TC77988, TC78214, TC85619, TC86687, TC85808) sont amplifiés par PCR utilisant l'ADN génomique de *Medicago truncatula* comme amorce. Ces 8 ESTs sont ensuite clonés en pGEM-Teasy vector (Promega) et vérifiés par séquençage.

Les 173 fragments d'ADN sont amplifiés par PCR utilisant les amorces universelles complémentaires aux séquences vecteurs encadrant le site de clonage des ADN. Les produits d'amplification sont analysés par électrophorèse et sont ajustés à 0,2-0,5 µg/µL avec du DMSO (50%) et déposés sur une membrane à l'aide d'un robot (Eurogridder spotting robot).

### c) Résultats

L'activité élicitrice des ulvanes extraits d'algues a été étudiée en suivant l'expression de façon simultanée de plusieurs centaines de gènes. Les différentes catégories d'ESTs sélectionnées sont classées par famille : voie des phénylpropanoïdes, biosynthèse des phytoalexines, protéines des parois, défense cellulaire, stress oxydatif, sénescence-HR, voie de l'éthylène, synthèse lipidique, , stress abiotiques, transduction des signaux, nodulines, gènes de ménage.

Les extraits d'algues vertes riches en ulvanes entraînent l'induction de 16 à 31 gènes potentiellement impliqués dans la défense sans perturber le métabolisme primaire. Des réponses similaires sont obtenues pour les 2 types d'apport, i.e. foliaire et racinaire. On note ainsi, pour l'ensemble des traitements, essentiellement l'induction de gènes relatifs aux familles protéines des parois, biosynthèse des phytoalexines et défense cellulaire.

L'induction des gènes est plus importante pour les ulvanes riches en dérivés d'acide xyloidurorhamnane, comme par exemple les ulvanes d'*Ulva armoricana* et d'*Enteromorpha intestinalis* Ces derniers présentent également la particularité d'induire un gène impliqué dans la voie des oxylipines. Les oligoulvanes obtenus après hydrolyse présentent des résultats identiques.

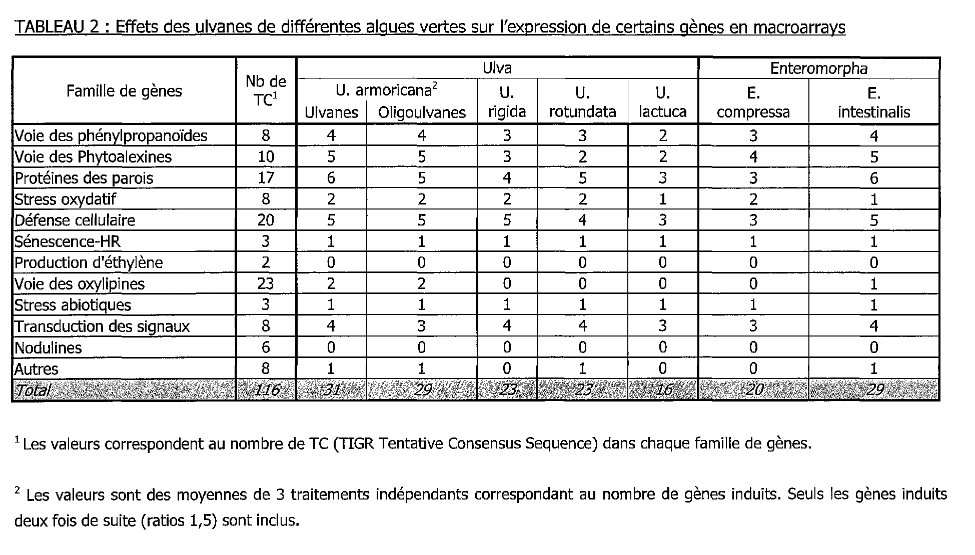

### d) Influence du nombre de traitements sur la sensibilisation de la plante

Une deuxième série d'expérimentations a été réalisée pour évaluer l'effet de la sensibilisation de la plante traitée avec l'extrait d*'Ulva armoricana* lors de l'attaque fongique. L'effet d'un second traitement avec l'extrait d*'Ulva armoricana,* 3 jours après la première pulvérisation, a ainsi été évalué. Les effets sur l'expression des gènes sont étudiés par macroarray.

Les traitements effectués en un ou deux apports induisent l'expression d'un grand nombre de gènes impliqués dans les mécanismes de défense et de signalisation à un degré similaire.

Les traitements induisent l'expression de gènes dans toutes les catégories fonctionnelles :
- celle des phénylpropanoïdes : phénylalanine ammonia-lyase, acide cafféique O-méthyltransférase, cinnamyl-alcool déshydrogénase,
- celle des phytoalexines : chalcone réductase, isoflavone réductase, vestitone réductase,
- celle des protéines pariétales : extensine, glycoprotéine riche en hydroxyproline, protéine riche en arabinogalactane, protéine riche en proline, prolyl hydroxylase endo, endo-1,3-1,4-β-D-glucanase,
- celle des gènes de défense : PR10-1, endochitinase, SRG1, inhibiteur de polygalacturonase, PR1.

Dans le cas du stress oxydatif, on observe l'induction de l'expression de différents gènes codant différentes enzymes : ascorbate péroxydase, péroxydase, superoxyde dismutase, gluthatione péroxydase ou glutathione S-transférase.

Au niveau du métabolisme des lipides, différents gènes impliqués dans la voie des oxylipines sont induits, notamment les phospholipases D et C, trois lipoxygénases, une désaturase et une oxophytodiénoate réductase. Deux traitements consécutifs induisent l'expression d'un nombre supérieur de gènes (6 gènes contre 2).

**TABLEAU 3 : Effets des ulvanes de Ulva armoricana (AV) sur l'expression de certains gènes en macroarrays**

| | | | Traitement | | | | | |
|---|---|---|---|---|---|---|---|---|
| TC TIGR^{b} | Fonction | Accession dans GB^{c} | AV^{d} | | | AV+AV^{e} | | |
| | | | 1 | 2 | 3 | 1 | 2 | 3 |
| Voie des phénylpropanoïdes | | | | | | | | |
| TC85501 | phénylalanine ammonia-lyase | AL372483 | NS | 2,33 | 1,83 | 1,18 | 4,44 | 1,00 |
| TC85550 | acide cafféique O-méthyltransférase | AL367074 | 1,52 | 1,93 | 2,54 | NS | 4,33 | 1,90 |
| TC85894 | caffeoyl-CoA O-méthyltransférase | AL368189 | 2,03 | 0,67 | 1,57 | NS | 1,22 | NS |
| TC77145 | cinnamyl-alcool déshydrogénase | AL372163 | 1,00 | 5,47 | 4,33 | 1,03 | 3,40 | 2,01 |

| Voie des phytoalexines | | | | | | | | |
|---|---|---|---|---|---|---|---|---|
| TC76884 | chalcone synthase | AL369218 | 1,20 | NS | 1,45 | 4,92 | 0,96 | 4,01 |
| TC85146 | chalcone synthase | AL368203 | 1,00 | 2,09 | 2,34 | 2,00 | NS | 1,13 |
| TC85169 | chalcone synthase | AL370220, AL385833 | 1,51 | 2,93 | 1,54 | 2,17 | 0,97 | 2,42 |
| TC85521 | Chalcone réductase | AL381630 | 1,00 | 1,00 | NS | 1,85 | 1,00 | 2,95 |
| TC85633 | chalcone isomérase | AL381790 | 2,01 | 3,31 | 1,25 | 4,88 | 6,04 | 5,17 |
| TC85477 | isoflavone réductase | AL384237 | 1,68 | 3,61 | 2,55 | 3,41 | 2,25 | 5,99 |
| TC85478 | isoflavone réductase | AL383870 | 1,00 | 1,00 | NS | 1,99 | 2,09 | 1,00 |
| TC77308 | vestitone réductase | AL383703, AL384920 | 3,96 | 1,92 | 3,09 | NS | 1,00 | 1,00 |

| Protéines de paroi | | | | | | | | |
|---|---|---|---|---|---|---|---|---|
| TC76311 | extensine | AL381854 | 1,00 | 2,76 | 1,79 | 2,00 | 2,34 | 1,47 |
| TC76716 | extensine | AL373614 | 1,15 | 3,08 | 2,59 | 1,64 | 3,51 | 2,12 |
| TC77527 | glycoprotéine riche en hydroxyproline | AL370995 | 0,77 | 1,19 | NS | NS | 2,50 | 1,56 |
| TC79404 | protéine riche en arabinngalactane | AL368602 | 1,00 | 2,08 | 5,16 | 3,33 | 3,37 | 2,97 |
| TC86688 | protéine riche en arabinoqalactane | AL381434 | 1,00 | 1,94 | 4,04 | 0,75 | NS | 0,74 |
| TC85413 | protéine riche en proline | AL386974 | 3,97 | 1,29 | 2,99 | NS | 1,60 | 2,59 |
| TC86651 | prolyl hydroxylase | AL367499 | 1,00 | 1,00 | 3,30 | 1,69 | 2,50 | 1,00 |
| TC86689 | endo-1,3-1,4-β-D-glucanase | AL387547 | 1,62 | 1,89 | 2,09 | 1,19 | 2,51 | 2,00 |

| Défense | | | | | | | | |
|---|---|---|---|---|---|---|---|---|
| TC76511 | PR10-1 | AL382676 | 1,72 | 5,69 | 4,40 | 3,43 | 1,54 | 2,15 |
| TC76513 | PR10-1 | AL373773 | 2,14 | 12,14 | 2,69 | 3,29 | 3,04 | 1,18 |
| - | PR10-1 | Y08641 | 5,12 | 19,05 | 0,99 | 11,22 | 2,07 | 2,70 |
| TC76833 | endochitinase | AL380364 | 1,16 | 2,19 | 2,61 | 1,52 | 2,22 | 1,43 |
| TC85427 | chitinase | AL388544 | 1,34 | 0,75 | NS | 0,50 | NS | 0,45 |
| TC85652 | SRG1 | AL379718 | 1,41 | 1,40 | NS | 1,71 | 3,50 | 1,48 |
| TC85805 | Inhibiteur de polygalacturonase | AL381114 | 1,80 | 1,00 | 1,89 | 0,97 | NS | 1,00 |
| TC86002 | PR1 | AL386306 | 1,00 | 1,00 | 5,22 | 1,63 | 2,81 | 1,00 |
| TC86646 | β-1,3-glucanase | AL378026 | 1,09 | 1,00 | NS | 1,00 | 5,44 | 1,36 |

| Stress oxydant | | | | | | | | |
|---|---|---|---|---|---|---|---|---|
| TC76384 | ascorbate péroxydase | AL367369 | 1,60 | 2,40 | 1,00 | 0,90 | 0,74 | NS |
| TC85974 | péroxydase | AL371851 | 1,05 | 1,46 | NS | 2,77 | 5,38 | 2,69 |
| TC76946 | superoxyde dismutase | AL375556 | 2,49 | 3,12 | 1,00 | 1,40 | NS | 1,00 |
| TC86106 | glutathione péroxydase | AL374155 | 0,88 | 1,43 | 1,40 | NS | 2,08 | 1,90 |
| TC85451 | glutathione S-transférase | AL368847 | 1,00 | 1,16 | 1,00 | 1,15 | 1,55 | 3,01 |
| TC87485 | similaire à une qermine | AL373691 | NS | 1,32 | 1,10 | 1,16 | NS | NS |

| Sénescence-HR | | | | | | | | |
|---|---|---|---|---|---|---|---|---|
| TC78195 | HSR203 | AL366024 | 1,34 | 2,58 | 4,38 | 1,98 | 2,78 | 1,31 |

| Signalisation lipidique | | | | | | | | |
|---|---|---|---|---|---|---|---|---|
| TC76357 | phospholipase D | AL383583, AL387293 | 1,60 | 1,39 | 1,44 | 2,75 | 5,49 | 2,40 |
| TC77257 | hydroperoxide lyase | AL372355 | 1,35 | 0,74 | 1,21 | 0,84 | 7,20 | 1,73 |
| TC82008 | phospholipase C | AL380498 | 1,00 | 1,04 | NS | 1,37 | 4,17 | 3,45 |
| TC84245 | lipoxygénase | AL371045, AL389771 | 1,00 | 1,14 | 1,46 | 1,57 | 1,86 | 0,83 |
| TC85148 | lipoxygénase | AL370268, AL381315 | 1,75 | NS | 1,11 | 2,04 | 2,03 | 1,03 |
| TC85171 | lipoxygénase | AL378899, AL380164 | 1,00 | NS | 1,53 | 2,27 | 2,75 | NS |
| TC85192 | lipoxygénase | AL387727 | 2,14 | 1,02 | 2,04 | 1,16 | NS | 1,00 |
| TC85264 | lipoxygénase | AL371045, AL389771 | 1,00 | 1,14 | 1,46 | 1,20 | 1,57 | 1,86 |
| TC85619 | lipoxygénase | | 1,00 | 1,93 | 2,05 | 1,44 | NS | 0,78 |
| TC85808 | oxophytodiénoate réductase | | 1,00 | NS | 1,00 | 1,49 | 1,92 | 4,42 |
| TC85814 | désaturase | AL367066, AL377575 | 1,54 | 0,91 | 0,95 | 2,28 | 1,63 | 1,41 |

| Stress abiotiques | | | | | | | | |
|---|---|---|---|---|---|---|---|---|
| TC77019 | ribonucléase | AL371802 | 1,52 | 2,72 | 1,67 | 0,47 | 0,80 | NS |

| Transduction des signaux | | | | | | | | |
|---|---|---|---|---|---|---|---|---|
| TC77346 | protéine kinase similaire à un récepteur | AL383027, AL384392 | 1,66 | 1,44 | 4,89 | 1,28 | NS | 1,06 |
| TC76783 | calmoduline | AL378480 | 2,40 | 1,71 | 1,52 | 0,82 | 1,46 | NS |
| TC76643 | protéine de réponse à l'ABA | AL373345 | 3,27 | 2,60 | 1,42 | 2,04 | 1,48 | NS |
| TC86374 | protéine de transport ABC | AL365693 | 1,44 | 1,98 | 2,71 | NS | 1,16 | NS |

| Noduline | | | | | | | | |
|---|---|---|---|---|---|---|---|---|
| TC76916 | MtN4 | AL376203 | 0,89 | 1,11 | 1,14 | NS | 1,63 | 1,58 |

| Autres | | | | | | | | |
|---|---|---|---|---|---|---|---|---|
| TC86776 | ß-glucosidase cyanogénique | AL370555 | 1,03 | NS | 1,00 | 1,38 | 1,65 | 1,00 |
| TC78462 | protéine liant l'acide nucléique | AL367624 | 1,00 | NS | NS | NS | 3,41 | 3,30 |
| TC85305 | aquaporine | AL370135 | 1,04 | NS | NS | 2,02 | 1,93 | 2,61 |
| TC87062 | ubiquinol-cytochrome-c réductase | AL386789 | NS | 4,41 | 4,54 | 3,81 | 8,96 | NS |

| | | | | | | | | |
|---|---|---|---|---|---|---|---|---|
| a : Valeurs correspondant aux rapports "intensités des signaux des plantes traitées par l'extrait d'*Ulva* (AV)" sur "intensités des signaux des plantes contrôles". Seuls les gènes induits (rapport>1,5) dans au moins deux expériences indépendantes sont inclus. Lors de notre comparaison des réplicats des trois expériences, nous considérons que le rapport d'un seul gène ne doit pas être induit dans un réplicat et réprimé dans au moins un des autres, sinon il est considéré comme non significatif (NS). b : TC TIGR, numéro de Tentative de Consensus selon The Institute of Genome Research. c : GB, numéro d'accession dans Genebank. d : AV, un seul traitement AV. e : AV+AV, deux traitements AV consécutifs. | | | | | | | | |

### EXEMPLE 3 - Mise en évidence des effets des ulvanes sur la défense des plantes vis-à-vis des stress abiotiques

L'expérimentation est conduite sur du maïs cultivé en pots à 25 °C.

L'extrait d'ulvanes est apporté par voie racinaire ou foliaire 17 jours après le semis.

Quatre jours après le traitement, on fait subir aux plantes un stress hydrique ou thermique (15 °C).

Les plantes sont récoltées 21 jours après l'application des stress au stade 8 feuilles.

Les résultats de cette expérimentation sont présentés au tableau 4.

L'application d'ulvanes permet de lutter partiellement contre les contraintes hydriques et thermiques en réponse à l'expression des gènes des stress oxydatifs ou abiotiques.

**Tableau 4 : Effets des ulvanes sur des plants de maïs en état de stress hydrique ou thermique**

| | | Poids sec de la plante (en indice) |
|---|---|---|
| Témoin non stressé | | 100 |
| Stress hydrique | | |
| Témoin sans ulvanes | | 60 |
| Apport foliaire | Ulvanes 0.1 g/L | 82 |
| | Ulvanes 10 g/L | 94 |
| Apport racinaire | Ulvanes 10 g/ha | 78 |
| | Ulvanes 1000 g/ha | 89 |
| Stress thermique | | |
| Témoin sans ulvanes | | 67 |
| Apport foliaire | Ulvanes 1 g/L | 85 |
| | Ulvanes 10 g/L | 99 |
| Apport racinaire | Ulvanes 10 g/ha | 84 |
| | Ulvanes 1000 g/ha | 97 |

### EXEMPLE 4 - Mise en évidence des effets des ulvanes sur la défense des plantes vis-à-vis des oomycètes

L'extrait d'ulvanes est pulvérisé (1g par litre i.e 200 g/ha) sur des plants de colza cultivés en pots au stade 2 feuilles.

Le nombre de plantules par traitement est de 28. L'inoculation par *Pythium* (fonte du semis) est effectuée 3 jours après le traitement.

Les plantules font l'objet d'une observation selon l'échelle de notation suivante :

| | |
|---|---|
| 0 | Pas d'attaque |
| 1 | Nécrose superficielle d'une longueur inférieure à 1 cm |
| 2 | Nécrose superficielle d'une longueur supérieure à 1 cm |
| 3 | Nécrose profonde d'une longueur inférieure à 0,5 cm |
| 4 | Nécrose profonde d'une longueur inférieure à 1 cm |
| 5 | Nécrose profonde d'une longueur supérieure à 1 cm |

Les résultats obtenus et présentés dans le tableau 5 ci-dessous montrent que l'extrait d'ulvanes selon l'invention permet de réduire significativement l'incidence de l'attaque par *Pythium,* en réduisant la longueur et la profondeur des nécroses.

**Tableau 5- Effets du traitement par ulvanes sur du colza infecté par Pythium**

| | Témoin | Ulvanes |
|---|---|---|
| Nécrose (indice) | 2,92 | 1,61 |
| Poids frais des plantules (en g) | 0,49 | 0,69 |

La mesure du poids frais des plantules confirme également la meilleure résistance du colza à l'attaque fongique.

### EXEMPLE 5 - Mise en évidence des effets des ulvanes sur la défense des plantes vis-à-vis d'autres attaques fongiques

### a) Interactions Luzerne (Medicago truncatula) - Colletotrichum trifolii

Pour contrôler si l'induction par les ulvanes de l'expression des gènes impliqués dans la défense est corrélée à une protection, une inoculation des plantes de *Medicago truncatula* par le champignon *Colletotrichum trifolii* (responsable de l'anthracnose) est effectuée sur des plantes âgées de 1 mois.

Deux jours après le dernier traitement avec l'extrait d'ulvanes (1 g par litre), les plantes sont inoculées par pulvérisation d'une suspension de spores de C. trifolii concentrée à 10⁶ cellules/mL sur les parties aériennes (1 mL/plante).

Les premiers symptômes sont observés 7 jours et 15 jours après l'infection.

Un mois plus tard, les parties aériennes sont récoltées et pesées pour évaluer le degré de protection du matériel végétal.

Quinze jours après l'inoculation, les parties aériennes des plantes non traitées sont totalement nécrosées et la plupart des plantes sont mortes. A l'inverse, seules de petites lésions sont visibles sur les feuilles et les tiges dans le cas des traitements (1 ou 2 apports). Les plantes inoculées non traitées encore vivantes ont perdu 70 % de leur poids frais en comparaison avec les plantes témoin non inoculées. Les plantes inoculées et traitées n'ont, quant à elles, perdu respectivement que 20 % et 10 % de leur poids frais pour un ou deux apports.

Un seul traitement permet d'obtenir une protection de 80 %, tandis qu'un deuxième traitement amène la protection à 90 %.

On obtient conformément à l'étude génomique une protection des plantes prétraitées avec l'extrait d'ulvane. Celle-ci est plus importante lorsque les plantes ont été traitées deux fois de suite par cet extrait avant l'infection.

### b) Interactions Pois - Mycosphaerella pinodes

L'extrait d'ulvanes (1 g par litre) est pulvérisé sur des plants de pois fourrager au stade 4 feuilles. L'inoculation est effectuée 3 jours après le traitement.

On mesure la longueur de la nécrose résultant de l'attaque ainsi que le poids frais de la plantule.

Les résultats obtenus et représentés au tableau 6 ci-dessous montrent que l'extrait d'ulvanes selon l'invention réduit la longueur des nécroses au niveau de la tige.

L'augmentation de plus de 25 % du poids frais des plantules traitées confirme la meilleure résistance du pois à l'attaque de *Mycosphaerella.*

**Tableau 6 - Effets du traitement par ulvanes sur du pois fourrager infecté par Mycosphaerella**

| | Longueur de la nécrose (mm) | Poids frais de la plantule (en g) |
|---|---|---|
| *Témoin* | 3,17 | 2,75 |
| *Ulvanes* | 1,79 | 3,45 |

### c) Interactions Poivron - Phytophtora capsicum

Des plants de poivrons cultivés en pots sont arrosés avec une solution d'ulvanes à raison de 1 et 10 g par litre. L'inoculation de *Phytophtora* est effectuée à la surface inférieure des feuilles 5 jours après le traitement.

Dans les trois jours qui suivent l'inoculation, on note une diminution significative de la taille des nécroses, comme le montre le tableau 7 ci-dessous.

**Tableau 7 - Evolution du diamètre des nécroses de plants de poivrons après traitement par ulvanes.**

| | *Témoin* | *Ulvanes* | |
|---|---|---|---|
| | | *1 g*/*L* | *10 g*/*L* |
| Diamètre des nécroses *(en mm)* | 29 | 17 | 8 |

### d) Interactions Vigne - Plasmopara viticola

Des plants de vignes cultivés en pots sous serre sont traités avec une solution d'ulvanes (1 g par litre).

Le traitement est réalisé en 1 ou 2 apports sous forme de pulvérisation foliaire. Le deuxième apport est réalisé une semaine après le premier traitement.

L'inoculation par *Plasmopara viticola* est effectuée 4 jours après le dernier traitement.

Un mois après la contamination, le traitement par la solution d'ulvanes (un apport) a permis de réduire :
- le ratio de feuilles infectées de 32 %,
- la surface de feuilles atteinte de 35 %,
- et le taux de sporulation de 41 %.

Le double traitement améliore ces résultats avec des réductions du pourcentage de feuilles infectées de 47 %, de la surface de feuilles atteinte de 46 % et du taux de sporulation de 52 %.

### EXEMPLE 6 - Mise en évidence des effets des ulvanes sur la défense des plantes vis-à-vis des attaques bactériennes

Un extrait d'ulvanes selon l'invention (1 g par litre) est pulvérisé sur des plants de tomates. Vingt-quatre heures plus tard, les plantes sont inoculées avec des *Pseudomonas syringae.* La concentration bactérienne des feuilles est déterminée 1, 3, 5 et 7 jours après l'inoculation par comptage des colonies bactériennes.

Les résultats obtenus sont reportés dans le tableau 8 ci-dessous.

**Tableau 8 - Nombre de bactéries par unité de surface foliaire (nb/cm²)**

| | Temps (jours) | | | | |
|---|---|---|---|---|---|
| Traitement | *0* | *1* | *3* | *5* | *7* |
| *Témoin* | 18000 | 136000 | 385000 | 520000 | 636000 |
| *Produit* | 24000 | 95000 | 224000 | 312000 | 440000 |

Le traitement selon l'invention permet de réduire le niveau de contamination de près de 31 % après 7 jours d'incubation.

### EXEMPLE 7 - Mise en évidence des effets des ulvanes sur la défense des plantes vis à vis des insectes et pathogènes transmis (virus, phytoplasme)

L'expérimentation est conduite sur des rosiers cultivés en pots sous serre. Les plantes sont traitées avec un extrait d'ulvanes préparé selon l'exemple 1 (0,1 g par litre ou 10 g par litre) en comparaison avec un témoin eau.

On dénombre ensuite le nombre de pucerons par feuille. Les résultats obtenus, représentés au tableau 9 ci-dessous, montrent que les ulvanes limitent l'invasion des pucerons chez les plantes traitées pour l'ensemble des traitements. A la concentration de 0,1 g par litre, le nombre de pucerons est réduit de 35 % dans le cas du traitement unique et de 42 % dans le cas du double traitement. A la concentration de 10 g par litre, la réduction est de 43 % et 58 % respectivement du nombre moyen de pucerons.

**Tableau 9 - Effet du traitement par ulvanes sur les pucerons**

| | | Apport foliaire | Réduction du nombre de pucerons (en % du témoin) |
|---|---|---|---|
| *Ulvanes* | *0,1 g*/*L* | 1 apport | 35 |
| | | 2 apports | 42 |
| | *10 g*/*L* | 1 apport | 43 |
| | | 2 apports | 58 |

### EXEMPLE 8 - Mise en évidence des effets des ulvanes sur la défense des plantes vis-à-vis des acariens

L'essai est mené sur des plants de fraisiers cultivés sous serre dans une zone naturellement sensible au développement d'acariens *(Tetranychus urticae).* L'apport de l'extrait d'ulvanes est effectué à deux concentrations (0,1 et 10 g par litre) en un seul ou deux apports séparés d'une semaine.

On mesure le nombre d'acariens par feuille.

Les résultats obtenus, présentés au tableau 10 ci-dessous, montrent que les ulvanes limitent l'invasion des acariens chez les plantes traitées pour l'ensemble des traitements. A la concentration de 0,1 g par litre, le nombre d'acariens est réduit de 33 % dans le cas du traitement unique et de 46 % dans le cas du double traitement. A la concentration de 10 g par litre, la réduction est de 50 % et 63 % respectivement du nombre moyen d'acariens par feuille.

**Tableau 10 - Effet du traitement par ulvanes sur des plants de fraisiers infectés par des acariens**

| | | Apport foliaire | Nombre d'acariens par feuille |
|---|---|---|---|
| *Témoin (eau)* | | | 52 |
| *Ulvanes* | *0,1 g*/*L* | 1 apport | 35 |
| | | 2 apports | 28 |
| | *10 g*/*L* | 1 apport | 26 |
| | | 2 apports | 19 |

### EXEMPLE 9 - Mise en évidence des effets des ulvanes sur la défense des plantes vis-à-vis des nématodes

Des plants de tomates d'environ 10 cm sont transplantés dans un milieu infesté avec *Meloidogyne incognita.*

Les plantes sont traitées soit par voie foliaire soit par incorporation dans le milieu nutritif de ferti-irrigation, à la dose de 1 g par litre.

Le deuxième apport du traitement est effectué 15 jours après le premier apport.

Le nombre de nématodes est déterminé 1,5 mois après le premier traitement.

Les résultats obtenus ont été reportés au tableau 11

**Tableau 11 - Effet du traitement par ulvanes sur des plants de tomates infestés par des nématodes**

| | | Nombre de nématodes / g de racines |
|---|---|---|
| *Témoin* | | 15 |
| *Apport foliaire* | 1 apport | 12 |
| | 2 apports | 9 |
| *Apport par ferti-irrigation* | 1 apport | 10 |
| | 2 apports | 7 |

L'extrait d'ulvanes réduit significativement le degré d'infection des racines de plants de tomates par les nématodes de 20 à 53 % selon les traitements.

Un deuxième apport se révèle toujours plus efficace qu'un seul.

L'extrait d'ulvanes renforce la résistance de la plante aux nématodes en inhibant leur pénétration et leur développement dans la racine.

### EXEMPLE 10 - Mise en évidence des effets des ulvanes sur la protection

### des semences

On a démontré que les ulvanes ont une action favorable sur la germination des semences contaminées par des agents pathogènes, à l'exemple de *Sclerotinia* sur tournesol, *Phoma linguam* sur colza et *Mycosphaerella pinodes* sur pois.

Le traitement des semences est réalisé par trempage (pendant 12 heures dans une solution d'ulvanes à 1 g par litre).

Dans le cas du témoin, le traitement est réalisée avec de l'eau distillée. L'inoculation des champignons est pratiquée juste avant le semis.

On a mesuré le pourcentage de germination et le taux de survie des semences infectées et les résultats obtenus ont été regroupés dans le tableau 12 ci-dessous.

**Tableau 12 : Effets des ulvanes sur la protection des semences**

| | Tournesol - *Sclerotinia* | | Colza - *Phoma linquam* | | Pois - *Mycosphaerella* | |
|---|---|---|---|---|---|---|
| | *Témoin* | *Ulvanes* | *Témoin* | *Ulvanes* | *Témoin* | *Ulvanes* |
| % de germination | 38 | 80 | 63 | 88 | 67 | 89 |
| Taux de Survie (%) | 0 | 47 | 29 | 61 | 42 | 64 |

Chez le tournesol, l'inoculation de *Sclerotinia* affecte fortement le taux de germination (38 %). Le traitement par ulvanes améliore considérablement le taux de germination (80 %). Il renforce également la vigueur des plantules avec un taux de survie de 47 % contre une mortalité totale pour le témoin.

Chez le colza infesté avec *P. linguam,* le traitement par ulvanes augmente de 40 % le taux de germination, ainsi que le taux de survie qui s'élève de 29 % pour le témoin à 61 %.

Chez le pois infesté par *M. pinodes,* le traitement par ulvanes améliore de 33 % le taux de germination, ainsi que le taux de survie qui passe de 42 % à 64 %.

Dans le cas du pois, on a également observé que la profondeur de la nécrose passe de 52 mm à 2,9 mm, indiquant un ralentissement de la progression du champignon dans la plante.

Les ulvanes induisent par conséquent une meilleure résistance des semences aux attaques des champignons.

### EXEMPLE 11 - Mise en évidence des effets des ulvanes sur la protection post-récolte des fruits et légumes

L'effet des ulvanes sur la conservation des fruits (pommes, oranges, tomates et raisins) est suivi dans des chambres climatiques maintenues à 17 °C. Le traitement par trempage est réalisé avec une solution d'ulvanes à la concentration de 10 g par litre.

Les fruits traités ou témoins sont inoculés avec une solution de spores de *Botrytis cinerea* concentrée à 10⁵/mL. L'inoculation est réalisée une semaine après le traitement.

Les fruits sont contrôlés après 3 mois pour les pommes et 1 mois pour les oranges, les tomates et le raisin.

Les résultats obtenus sont présentés dans le tableau 13 ci-dessous.

**Tableau 13 : Effets des ulvanes sur la protection post-récolte des fruits et légumes**

| Fruits | Indice de protection (en % de témoin inoculé) |
|---|---|
| *Pommes* | 65 % |
| *Oranges* | 38 % |
| *Tomates* | 42 % |
| *Raisins* | 47 % |

Le traitement par ulvanes a permis de réduire respectivement de 65 %, 38 %, 42 % et 47 % les dommages post-récolte pour les pommes, les oranges, les tomates et les raisins.

Le traitement "ulvanes" prévient et retarde l'apparition des dommages des fruits durant leur conservation. Il améliore ainsi leur temps de conservation.

Par conséquent, l'application des ulvanes selon l'invention permet également de réduire les dommages post-récolte liés aux maladies ou aux attaques de pathogènes.

### EXEMPLE 12 - Exemples de formulations incorporant des ulvanes

D'une façon générale, la quantité efficace d'ulvanes ou d'oligosaccharides dérivés d'ulvanes à utiliser dans le cadre des applications de l'invention sera de 0,1 g à 100 g par litre. pour les apports sous forme liquide en foliaire ou dans les solutions racinaires (hydroponie, goutte à goutte, ...). De préférence, cette quantité sera de 0,1 à 20 g par litre, et encore de préférence de 0,5 à 10 g par litre.

D'une façon générale, la quantité efficace d'ulvanes ou d'oligosaccharides dérivés d'ulvanes à utiliser dans le cadre des applications de l'invention sera de 10 à 1000 g/ha pour les apports sous forme solide dans les produits pulvérulents ou granulés. De préférence, cette quantité sera de 50 à 500 g/ha, et encore de préférence de 150 à 250 g/ha.

On donnera ci-après, à titre d'exemples, diverses formulations utilisables selon l'invention avec des indications sur les conditions de mise en oeuvre de ces formulations.

### A - AMENDEMENTS

### AMENDEMENT CALCAIRE

| | |
|---|---|
| Lithothamnium | 1000 kg |
| Dérivés d'ulvanes | QSP 200 g/ha |
| Dose d'apport : 1 T/ha | |
| | |
| Carbonate de calcium | 1000 kg |
| Dérivés d'ulvanes | QSP 1000 g/ha |
| Dose d'apport : 1 T/ha | |

### AMENDEMENT ORGANIQUE ET SUPPORTS DE CULTURE

| | |
|---|---|
| Terreau | 500 kg |
| Tourbe | 500 kg |
| Dérivés d'ulvanes | QSP 500 g/ha |
| Dose d'apport : 1T/ha | |

### B - ENGRAIS RACINAIRES

### ENGRAIS NP

| | |
|---|---|
| Lithothamnium | 310 kg |
| Chlorure de potassium | 167 kg |
| Urée | 161 kg |
| Sulfate d'ammoniaque | 362 kg |
| Dérivés d'ulvanes | QSP 200 g/ha |

| CULTURES | DOSE D'APPORT (kg/ha) |
|---|---|
| Pâtures Céréales Maïs | 200 - 400 |

### ENGRAIS PK

| | |
|---|---|
| Lithothamnium | 297 kg |
| Phosphate naturel | 536 kg |
| Chlorure de potassium | 167 kg |
| Dérivés d'ulvanes | QSP 500 g/ha |

| CULTURES | DOSE D'APPORT (kg/ha) |
|---|---|
| Toutes cultures | 300 - 500 |

### ENGRAINS NPK + MgO

| | |
|---|---|
| Lithothamnium | 158 kg |
| Phosphate d'ammoniaque | 116 kg |
| Sulfate d'ammoniaque | 186 kg |
| Urée | 156 kg |
| Oxyde de magnésium | 50 kg |
| Chlorure de potassium | 334 kg |
| Dérivés d'ulvanes | QSP 1000 g/ha |

| CULTURES | DOSE D'APPORT (kg/ha) |
|---|---|
| Maïs Céréales Prairies Toutes cultures | 400 - 800 |

### C - ENGRAIS FOLIAIRES

### SOLUTION Mg

| | |
|---|---|
| Nitrate de Magnésium | 50 kg |
| Eau | 50 kg |
| Dérivés d'ulvanes | QSP 1 g/L (solution finale appliquée sur la plante) |

| CULTURES | Nombre d'apports à différents stades de la campagne | Dose par apport |
|---|---|---|
| Vergers | 3 - 6 | 8 L/ha |
| Cultures maraîchères | 2 - 6 | 5 - 8 L/ha |

### SOLUTION N Fe Mn

| | |
|---|---|
| Nitrate de manganèse | 15 kg |
| Chlorure ferrique | 25 kg |
| Eau | 60 kg |
| Dérivés d'ulvanes | QSP 0,1 g/L (solution finale appliquée sur la plante) |

| CULTURES | Nombre de traitements | Dose par traitement |
|---|---|---|
| Vergers | 4 - 6 | 3 - 6 L/ha |
| Cultures maraîchères | 4 - 6 | 3 - 6 L/ha |

### SOLUTION N Mn Zn

| | |
|---|---|
| Nitrate de Manganèse | 31 kg |
| Nitrate de Zinc | 22 kg |
| Eau | 47 kg |
| Dérivés d'ulvanes | QSP 10 g/L (solution finale appliquée sur la plante) |

| CULTURES | Nombre d'apports | Dose par apport |
|---|---|---|
| Maïs | 1 - 2 | 4 - 8 L/ha |
| Lin | 1 - 2 | 4 - 8 L/ha |
| Betterave | 1 - 3 | 4 - 8 L/ha |
| Soja | 1 - 2 | 4 - 8 L/ha |
| Pomme de terre | 1 - 3 | 4 - 8 L/ha |
| Haricots pois | 2 - 3 | 4 - 8 L/ha |

### SOLUTION NPK Oligoéléments

| | |
|---|---|
| Urée | 17 kg |
| Acide phosphorique | 9 kg |
| Potasse | 9 kg |
| Nitrate de Manganèse | 0,7 kg |
| Nitrate de Zinc | 0,3 kg |
| Nitrate de Cuivre | 0,10 kg |
| Chlorure ferrique | 0,20 kg |
| Acide borique | 0,4 kg |
| Eau | 63,3 kg |
| Dérivés d'ulvanes | QSP 1 g/L (solution finale appliquée sur la plante) |

| CULTURES | Nombre d'apports | Dose par apport |
|---|---|---|
| Cultures maraîchères | 5 - 10 | 4 - 6 L/ha |
| Vergers | 4 - 6 | 4 - 6 L/ha |

### SOLUTION BPK

| | |
|---|---|
| Potasse | 8 kg |
| Acide phosphorique | 1 kg |
| Acide borique | 1 kg |
| Eau | 90 kg |
| Dérivés d'ulvanes | QSP 10 g/L (solution finale appliquée sur la plante) |

| CULTURES | Nombre d'apports | Dose par apport |
|---|---|---|
| Cultures maraîchères | 2 - 4 | 3 - 5 L/ha |
| Cultures fruitières | 3 | 5 L/ha |

### D - SOLUTIONS NUTRITIVES RACINAIRES (HYDROPONIE, GOUTTE A GOUTTE)

### SOLUTION NPK Mg

| | |
|---|---|
| Nitrate de potassium | 50 g/L |
| Phosphate de potassium | 27 g/L |
| Sulfate de magnesium | 49 g/L |
| Dérivés d'ulvanes | 200 g/L (ie. 1g/L de solution finale appliquée sur la plante) |

Dilution 1 L pour 200 L d'eau

### SOLUTION N Ca Mg

| | |
|---|---|
| Calcium nitrate | 118 g/L |
| Chelate de fer | 5 g/L |
| Dérivés d'ulvanes | 100 g/L (ie. 0,5 g/L de solution finale appliquée sur la plante) |

Dilution 1 L pour 200 L d'eau

## Revendications

1. Utilisation des ulvanes, ou d'oligosaccharides dérivés d'ulvanes obtenus par hydrolyse acide ou enzymatique dudit ulvane, comme activateurs des réactions de défense des plantes et de résistance contre des contraintes biotiques ou abiotiques.

2. Utilisation selon la revendication 1, **caractérisée en ce que** les ulvanes précités sont extraits d'algues choisies dans le groupe constitué des espèces suivantes : *Ulva armoricana, Ulva rigida, Ulva rotundata, Ulva lactuca, Enteromorpha intestinalis* et *Enteromorpha compressa.*

3. Utilisation selon la revendication 1, **caractérisée en ce que** les ulvanes précités sont extraits d'algues choisies dans le groupe constitué des espèces suivantes : *Ulva armoricana, Enteromorpha intestinalis* et *Enteromorpha compressa.*

4. Utilisation selon la revendication 2 ou 3, **caractérisée en ce que** les extraits précités sont obtenus par un procédé comportant généralement les étapes suivantes : lavage, broyage, extraction.

5. Utilisation selon la revendication 2 ou 3, **caractérisée en ce que** les extraits précités sont obtenus par un procédé comportant généralement les étapes suivantes : lavage, broyage, extraction (séparation solide-liquide), fractionnement et concentration.

6. Utilisation selon l'une des revendications 1 à 5, **caractérisée en ce que** la quantité efficace d'ulvanes ou d'oligo-saccharides dérivés d'ulvanes apportée aux plantes est de 0,1 g à 100 g par litre pour les apports sous forme liquide, par voie foliaire, dans les solutions nutritives racinaires ou dans les solutions de traitement de semences ou post-récolte, ou bien encore de 10 à 1000 g par hectare pour les apports sous forme solide, dans les produits pulvérulents ou granulés.

7. Procédé pour activer les réactions de défense des plantes et de résistance contre des contraintes biotiques ou abiotiques, **caractérisé en ce qu'**il comprend l'application aux dites plantes, d'une quantité efficace d'ulvanes ou d'oligosaccharides dérivés d'ulvanes obtenus par hydrolyse acide ou enzymatique dudit ulvane.

8. Procédé selon la revendication 7, **caractérisé en ce que** l'application aux plantes est réalisée par voie foliaire ou par voie racinaire.

9. Procédé selon la revendication 7 ou 8, **caractérisé en ce que** la quantité efficace apportée aux plantes est de 0,1 g à 100 g par litre pour les apports sous forme liquide, par voie foliaire, dans les solutions nutritives racinaires ou dans les solutions de traitement de semences ou post-récolte, ou bien encore de 10 à 1000 g par hectare pour les apports sous forme solide dans les produits pulvérulents ou granulés.

## Patentansprüche

1. Verwendung von Ulvanen, oder von aus Ulvanen abgeleiteten Oligosacchariden, die durch saure oder enzymatische Hydrolyse des Ulvans erhalten werden, als Aktivatoren der Abwehrreaktionen von Pflanzen und Reaktionen zur Resistenz gegen biotischen oder abiotischen Stress.

2. Verwendung nach Anspruch 1, **dadurch gekennzeichnet, dass** die vorgenannten Ulvane aus Algen, ausgewählt aus der Gruppe, die von den folgenden Spezies: *Ulva armoricana, Ulva rigida, Ulva rotundata, Ulva lactuca, Enteromorpha intestinalis* und *Enteromorpha compressa* gebildet ist, extrahiert sind.

3. Verwendung nach Anspruch 1, **dadurch gekennzeichnet, dass** die vorgenannten Ulvane aus Algen, ausgewählt aus der Gruppe, die von den folgenden Spezies: *Ulva armoricana, Enteromorpha intestinalis* und *Enteromorpha compressa* gebildet ist, extrahiert sind.

4. Verwendung nach Anspruch 2 oder 3, **dadurch gekennzeichnet, dass** die vorgenannten Extrakte durch ein Verfahren erhalten werden, das im Allgemeinen die folgenden Schritte umfasst: Waschen, Zerkleinern, Extraktion.

5. Verwendung nach Anspruch 2 oder 3, **dadurch gekennzeichnet, dass** die vorgenannten Extrakte durch ein Verfahren erhalten werden, das im Allgemeinen die folgenden Schritte umfasst: Waschen, Zerkleinern, Extraktion (Fest-Flüssig-Trennung), Fraktionierung und Konzentration.

6. Verwendung nach einem der Ansprüche 1 bis 5, **dadurch gekennzeichnet, dass** die den Pflanzen zugeführte wirkungsvolle Menge von Ulvanen oder von aus Ulvanen abgeleiteten Oligosacchariden 0,1 g bis 100 g pro Liter bei Zufuhr in flüssiger Form, über die Blätter, in Wurzelnährlösungen oder in Lösungen zur Behandlung von Saatgut oder nach der Ernte oder aber 10 bis 1000 g pro Hektar bei der Zufuhr in fester Form, in pulverförmigen Produkten oder Granulaten beträgt.

7. Verfahren zur Aktivierung der Abwehrreaktionen von Pflanzen und Reaktionen zur Resistenz gegen biotischen oder abiotischen Stress, **dadurch gekennzeichnet, dass** es das Aufbringen einer wirkungsvollen Menge von Ulvanen oder von aus Ulvanen abgeleiteten Oligosacchariden, die durch saure oder enzymatische Hydrolyse des Ulvans erhalten werden, auf die Pflanzen umfasst.

8. Verfahren nach Anspruch 7, **dadurch gekennzeichnet, dass** das Aufbringen auf die Pflanzen über die Blätter oder über die Wurzeln erfolgt.

9. Verfahren nach Anspruch 7 oder 8, **dadurch gekennzeichnet, dass** die den Pflanzen zugeführte wirkungsvolle Menge 0,1 g bis 100 g pro Liter bei Zufuhr in flüssiger Form, über die Blätter, in Wurzelnährlösungen oder in Lösungen zur Behandlung von Saatgut oder nach der Ernte oder aber 10 bis 1000 g pro Hektar bei der Zufuhr in fester Form in pulverförmigen Produkten oder Granulaten beträgt.

## Claims

1. The use of ulvans, or of ulvan-derived oligosaccharides obtained by acid hydrolysis or enzymatic hydrolysis of said ulvans, as activators of plant defense and resistance reactions against biotic or abiotic stresses.

2. The use as claimed in claim 1, **characterized in that** the abovementioned ulvans are extracted from algae chosen from the group consisting of the following species: *Ulva armoricana, Ulva rigida, Ulva rotundata, Ulva lactuca, Enteromorpha Intestinalis* and *Enteromorpha compressa.*

3. The use as claimed in claim 1, **characterized in that** the abovementioned ulvans are extracted from algae chosen from the group consisting of the following species: *Ulva armoricana, Enteromorpha intestinalis* and *Enteromorpha compressa.*

4. The use as claimed in claim 2 or 3, **characterized in that** the abovementioned extracts are obtained by means of a method generally comprising the following steps: washing, milling, extraction.

5. The use as claimed in claim 2 or 3, **characterized in that** the abovementioned extracts are obtained by means of a method generally comprising the following steps: washing, milling, extraction (solid-liquid separation), fractionation and concentration.

6. The use as claimed in one of claims 1 to 5, **characterized in that** the effective amount of ulvans or of ulvan-derived oligosaccharides given to the plants is from 0.1 to 100 g per liter when applied in liquid form via the leaves, in nutritive solutions for the roots or in solutions for seed or post-harvest treatment, or else from 10 to 1000 g per hectare when applied in solid form, for example in pulverulent or granulated products.

7. A method for activating plant defense and resistance reactions against biotic or abiotic stresses, **characterized in that** it comprises the application, to said plants, of an effective amount of ulvans or of ulvan-derived oligosaccharides obtained by acid hydrolysis or enzymatic hydrolysis.

8. The method as claimed in claim 7, **characterized in that** the application to the plants is carried out via the leaves or via the roots.

9. The method as claimed in claim 7 or 8, **characterized in that** the effective amount given to the plants is from 0.1 g to 100 g per liter when applied in liquid form via the leaves, in nutritive solutions for the roots or in solutions for seed or post-harvest treatment, or else from 10 to 1000 g per hectare when applied in solid form in pulverulent or granulated products.
